# EUROPÄISCHE PATENTSCHRIFT

(11) **EP 1 900 579 B1**
(45) Veröffentlichungstag und Bekanntmachung des Hinweises auf die Patenterteilung: **07.02.2018**
(21) Anmeldenummer: 07115144.3
(22) Anmeldetag: 28.08.2007
(51) Int. Cl.: B60R 25/00, B60R 25/04

(54) **Zugangsanordnung für ein Fahrzeug**
Access assembly for a vehicle
Agencement d'accès pour un véhicule

(30) Priorität: 13.09.2006 DE 102006042976
(43) Veröffentlichungstag der Anmeldung: 19.03.2008
(73) Patentinhaber: Continental Automotive GmbH, 30165 Hannover (DE)
(72) Erfinder: Bergerhoff, Nikolas, 93047 Regensburg (DE); Froitzheim, Herbert, 93186 Pettendorf (DE); Klement, Thomas, 93059 Regensburg (DE); Piesch, Wolfgang, 93128 Regenstauf (DE); Wagner, Roland, 93093 Donaustauf (DE)

(56) Entgegenhaltungen:
- EP-A- 1 510 835
- DE-A1- 10 056 864
- DE-A1- 10 064 141
- DE-A1- 19 845 649
- DE-A1- 19 939 550
- DE-B3-102004 039 835
- DE-B3-102005 032 402
- DE-C1- 19 735 658
- US-A1- 2002 027 498

## Beschreibung

Die vorliegende Erfindung betrifft eine Zugangsanordnung bzw. eine Identifikationsanordnung für ein Fahrzeug sowie ein Verfahren zum Betreiben einer derartigen Anordnung.

In heutigen Fahrzeugen bzw. Kraftfahrzeugen sind im zunehmenden Maße immer mehr elektronische Zugangsberechtigungssysteme vorgesehen, bei dem die Zugangsberechtigungsanfrage mittels einer Fernbedienung eingeleitet wird. Im einfachsten Falle besteht dieses Zugangsberechtigungssystem aus einem oder mehreren elektronisch steuerbaren Schlössern, einer Steuerung und zumindest einem dazu gehörigen elektronischen Schlüssel, also der Fernbedienung.

Moderne und zukünftige Zugangsberechtigungssysteme bzw. Zugangsanordnungen in Kraftfahrzeugen verwenden elektronische Sicherungssysteme, beispielsweise unter Verwendung der Transpondertechnik. Vor dem Öffnen bzw. der Inbetriebnahme des Kraftfahrzeugs erfolgt hierzu zunächst eine drahtlose Datenkommunikation zwischen einem im Kraftfahrzeug angeordneten Transceiver und einem beispielsweise in einem Schlüssel oder Schlüsselanhänger des Kraftfahrzeugnutzers angeordneten Transponder, bei der kodierte Daten ausgetauscht werden, die eine gültige Zugangsberechtigung, beispielsweise durch den Kraftfahrzeugbesitzer, sicherstellt. Ein solches Zugangsberechtigungssystem ist beispielsweise das von der Firma Siemens VDO entwickelte und vertriebene PASE-System, wobei PASE für "Passive Access Start and Entry" steht. Eine Zugangsberechtigungsanfrage wird hier beispielsweise durch ein Betätigen eines Türgriffs oder lediglich durch das Annähern an das Kraftfahrzeug initiiert. Da hier kein aktives Betätigen eines mechanischen oder elektronischen Schlüssels vorgenommen werden muss, wird diese Art der Zugangsberechtigung auch als passive Zugangsberechtigungsanfrage, die entsprechenden Schließsysteme als passive elektronische Zugangsberechtigungssysteme bezeichnet.

Bisweilen besteht der Bedarf, ein bestehendes schlüsselloses elektronisches Zugangsberechtigungssystem, das nicht über ein passives Zugangssystemberechtigungssystem, wie das vorstehend genannte PASE-System, verfügt, mit eben einem solchen passiven Zugangsberechtigungssystem nachzurüsten. Bei bekannten Systemen ist zum Nachrüsten eines passiven Zugangsberechtigungssystems fahrzeugseitig, insbesondere in zumindest einer Fahrzeugtür, ein Sender bereit zu stellen, der zyklisch den elektronischen Schlüssel für das passive Zugangsberechtigungssystem (PASE-Schlüssel) sucht. Ferner ist fahrzeugseitig ein entsprechender Empfänger anzuordnen, der mit der Zentralverriegelung des bisherigen Systems elektrisch gekoppelt ist und der nach einer positiven Auswertung der Datenkommunikation mit dem PASE-Schlüssel ein entsprechendes Steuersignal an die Zentralverriegelung, mit der er elektronisch gekoppelt ist, sendet. Ein derartiges nachrüstbares passives Zugangsberechtigungssystem ist beispielsweise aus der DE 10 2004 039 835 B3 bekannt.

In der genannten Schrift wird dargestellt, wie ein Fahrzeugnutzer zu dem mit einem passiven Zugangsberechtigungssystem nachgerüsteten Fahrzeug Zugang erhalten kann. Jedoch wird hier nicht der Aspekt beleuchtet, was geschieht, wenn der Fahrzeugnutzer beispielsweise nach Abstellen des Fahrzeugs, dieses verlässt. Zum Einen kann dabei der Fall auftreten, dass ein elektronischer Schlüssel für den passiven Zugang im Fahrzeug liegen bleibt, während mittels eines zweiten Schlüssels aufgrund einer Betätigung einer Verriegelungstaste dieses Schlüssels ein Signal zum Verriegeln des Fahrzeugs gegeben wird. Es ist auch denkbar, dass durch einen anderen Mechanismus eine Verriegelung des Fahrzeugs durchgeführt wird. Bei herkömmlichen passiven Zugangsberechtigungssystemen wird zum Deaktivieren derartiger im Fahrzeug liegen gebliebener elektronischer Schlüssel nach der Verriegelung ein spezielles im Wesentlichen auf den Innenraum begrenztes Sperrsignal oder Deaktivierungssignal gesendet, um die im Fahrzeug liegen gebliebenen elektronischen Schlüssel zumindest für eine bestimmte Zeit zu sperren bzw. zu deaktivieren. Bei einem nachgerüsteten passiven Zugangsberechtigungssystem wird, wie oben kurz angedeutet, die nachgerüstete fahrzeugseitige Sendeeinheit zum zyklischen Aussenden von Anfragesignalen an den elektronischen Schlüssel insbesondere in einer Fahrzeugtür vorgesehen. Aufgrund dessen ist es somit schwierig, ein im Wesentlichen auf den Innenraum begrenztes Sperrsignal auszusenden, ohne außerhalb des Fahrzeugs befindliche elektronische Schlüssel ungewollter Weise zu sperren bzw. zu deaktivieren.

Die gattungsbildende Druckschrift DE 100 64 141 A1 betrifft eine Zugangsanordnung für ein Fahrzeug. Die hier gezeigte Zugangsanordnung ist in der Lage, mittels einer fahrzeugseitigen Sende-/Empfangseinrichtung Abfragesignale auszusenden, die automatisch von einem Codegeber beantwortet werden. Die Ermittlung der Position des Codegebers erfolgt durch eine fahrzeugseitige Steuereinrichtung. Diese gibt je nach Position des Codegebers unterschiedliche Steuerbefehle aus. Die Druckschrift DE 100 46 897 A1 zeigt ein Verfahren zum Senden und Empfangen mit wenigstens einer ersten Sende- und Empfangseinrichtung eines Objekts und wenigstens einer weiteren mobilen Sende- und Empfangseinrichtung für das Auslösen wenigstens einer Aktion im Objekt, insbesondere zum Deaktivieren und/oder Aktivieren einer Wegfahrsperre bzw. zum Ent- und/oder Verriegeln eines Fahrzeugs, wobei in der mobilen Sende- und Empfangseinrichtung sowohl Sendefeldstärke als auch Senderichtung der ersten Sende- und Empfangseinrichtung in Abhängigkeit der relativen Lage zueinander detektiert wird, in einer Auswerteeinheit mit Sollwerten verglichen wird und in Abhängigkeit des Ergebnisses des Vergleichs eine Aktion gesteuert wird. Somit besteht die Aufgabe der vorliegenden Erfindung darin, eine insbesondere nachrüstbare Zugangsanordnung bzw. ein Verfahren zum Betreiben einer solchen zu schaffen, welche die dargestellten Probleme des Stands der Technik löst und eine verbesserte Sicherheit gewährleistet.

Diese Aufgabe wird durch die unabhängigen Ansprüche gelöst. Vorteilhafte Ausgestaltungen sind Gegenstand der Unteransprüche.

Dabei umfasst eine Zugangsanordnung bzw. eine Identifizierungsanordnung für ein Fahrzeug, durch die insbesondere der Zugang zu dem Fahrzeug steuerbar ist, folgende Merkmale. Es ist eine fahrzeugseitige Sende-/Empfangseinrichtung zum Aussenden von einem oder mehreren fahrzeugseitigen Signalen bzw. Abfragesignalen vorgesehen. Insbesondere ist die fahrzeugseitige Sende-/Empfangseinrichtung dafür ausgelegt, Abfragesignale mit gleichen Signaleigenschaften, wie beispielsweise mit gleicher Feldstärke und/oder gleicher Feldrichtung auszusenden. Ferner können auch die Signaleigenschaften innerhalb eines insbesondere über einen längeren Zeitabschnitt (beispielsweise im Bereich von einer bis mehreren Sekunden) ausgesendeten Abfragesignals gleich bleiben. Außerdem umfasst die Zugangsanordnung zumindest einen mobilen Identifikationsgeber bzw. eine tragbare Benutzeridentifizierungsvorrichtung mit einer identifikationsgeberseitigen Sende-/Empfangseinrichtung zum Empfangen von Abfragesignalen von der fahrzeugseitigen Sende-/Empfangseinrichtung, und zum Auswerten von Signaleigenschaften des einen oder der mehreren Abfragesignale an zumindest zwei verschiedenen Zeitpunkten. Es ist diesbezüglich möglich, dass zumindest zwei Auswertungen bzw. Messungen der Signaleigenschaften insbesondere bei einem über einen längeren Zeitabschnitt (beispielsweise im Bereich von einer bis mehreren Sekunden) ausgesendeten Abfragesignal durchgeführt werden, oder dass die Signaleigenschaften von mehreren bzw. zumindest zwei der empfangenen Abfragsignale ausgewertet bzw. gemessen werden. Der zumindest eine mobile Identifikationsgeber hat zudem eine identifikationsgeberseitige Steuereinrichtung zum Ausgeben eines unterschiedlichen Steuerbefehls in Abhängigkeit einer Änderung bezüglich der an zumindest zwei verschiedenen Zeitpunkten ausgewerteten bzw. gemessenen Signaleigenschaften. Dabei ist die identifikationsgeberseitige Steuereinrichtung zum Ausgeben eines Deaktivierungssignals zum Deaktivieren des zumindest einen mobilen Identifikationsgebers, insbesondere der identifikationsgeberseitigen Sende-/Empfangseinrichtung, bei einer Änderung bezüglich der zu zumindest zwei verschiedenen Zeitpunkten ausgewerteten Signaleigenschaften kleiner oder gleich einem vorbestimmten Schwellenwert und zum Ausgeben eines Verriegelungssignals zum Verriegeln von zumindest einer Tür des Fahrzeugs bei einer Änderung bezüglich der zu zumindest zwei verschiedenen Zeitpunkten ausgewerteten Signaleigenschaften größer dem vorbestimmten Schwellenwert eingerichtet. Aufgrund der Auswertung der Signaleigenschaften an den zumindest zwei verschiedenen Zeitpunkten ist es für die identifikationsgeberseitige Steuereinrichtung somit möglich, zu beurteilen, ob sich der mobile Identifikationsgeber bewegt (Änderung der Signaleigenschaften), beispielsweise weil ihn der Kraftfahrzeugnutzer beim Entfernen vom Fahrzeug wegträgt, oder sich nicht bewegt (geringe oder gar keine Änderung der gemessenen bzw. ausgewerteten Signaleigenschaften), weil er beispielsweise vom Kraftfahrzeugnutzer im Fahrzeug bzw. der Fahrgastzelle vergessen wurde. Anders ausgedrückt in dem Fall, dass Abfragesignale mit gleichen bzw. zeitlich gleichbleibenden

Signaleigenschaften ausgesendet werden, werden an einem bestimmten Ort auch die gemessenen Signaleigenschaften (wie Feldstärke bzw. Feldrichtung) von empfangenen Abfragesignalen zumindest im Mittel gleich bleiben. Folglich wird ein stationärer bzw. im Fahrzeug vergessener Identifikationsgeber zumindest im Mittel keine Änderung von Signaleigenschaften bei der Messung von Abfragesignalen erkennen, während ein sich mit dem Kraftfahrzeugnutzer mitbewegender Identifikationsgeber eine Änderung der gemessenen Signaleigenschaften feststellt. Entsprechend einer Veränderung der Signaleigenschaften kann die identifikationsgeberseitige Steuereinrichtung einen unterschiedlichen Steuerbefehl ausgeben, der zum einen im mobilen Identifikationsgeber selbst ausgeführt wird oder nach Übertragen mittels der identifikationsgeberseitigen Sende-/Empfangseinrichtung zum Fahrzeug dort ausgeführt werden kann. Folglich lassen sich durch die Überwachung der Signaleigenschaften der Abfragesignale und das entsprechende Aussenden eines bestimmten Steuerbefehls erforderliche Sicherheitsmaßnahmen ausführen, um die Sicherheit der Zugangsanordnung zu verbessern.

Es ist möglich, dass zum Auslösen des Aussendens des einen oder der mehreren fahrzeugseitigen Signale bzw. Abfragesignale durch die fahrzeugseitige Sende-/Empfangseinrichtung eine Auslöseeinrichtung vorgesehen ist. Dabei ist die Auslöseeinrichtung ausgelegt, ein auslösendes Ereignis, wie ein Auslösesignal oder einen Auslösezustand zu erfassen, und ansprechend darauf, die fahrzeugseitige Sende-/Empfangseinrichtung zu veranlassen, das eine oder die mehreren Abfragesignale auszusenden.

Die Auslöseeinrichtung kann als auslösendes Ereignis dabei beispielsweise einen Türsensor umfassen, der zum Erfassen eines Schließzustands bzw. eines offenen oder geschlossenen Zustands zumindest einer Tür des Fahrzeugs dient. Als ein Auslösesignal oder ein Auslösezustand (Trigger) kann dabei ein erfasster geschlossener Türzustand von dem Türsensor dienen, so dass ansprechend auf den erfassten geschlossenen Türzustand die fahrzeugseitige Sende-/Empfangseinrichtung zum Aussenden der Abfragesignale veranlasst wird. Es ist ferner denkbar, als Kriterium für das Aussenden des einen oder der mehreren Abfragesignale festzulegen, dass zunächst ein offener und dann ein geschlossener Türzustand festgestellt wird. Dies kann dann auftreten, wenn ein Fahrzeugnutzer am Zielort die Fahrertür öffnet, um auszusteigen, und diese dann wieder schließt, nach dem er ausgestiegen ist. Als weiteres zusätzliches oder alternatives Kriterium (auslösendes Ereignis) neben dem Erkennen eines geschlossenen bzw. zunächst offenen und dann geschlossenen Zustands für das Aussenden der Mehrzahl von Abfragesignalen kann sein, dass ein Verriegelungszustand der zumindest einen Tür des Fahrzeugs erfasst wird, wobei das eine oder die mehreren Abfragesignale dann auszusenden begonnen werden, wenn ein verriegelter Zustand der zumindest einen Tür erfasst wird. Zum Abfragen des Verriegelungszustands der Tür kann die Auslöseeinrichtung eine Verrieglungseinrichtung umfassen, die der zumindest einen Tür des Fahrzeugs zugeordnet ist. Außerdem kann als weiteres zusätzliches oder alternatives Kriterium neben den genannten Kriterien sein, dass ein Betriebszustand des Motors bzw. der Brennkraftmaschine erfasst wird, wobei das Aussenden des einen oder der mehreren von Abfragesignalen dann begonnen wird, wenn der Motor abgestellt ist bzw. sich in einem deaktivierten Zustand befindet. Zum Erfassen des Betriebszustands des Motors bzw. der Brennkraftmaschine kann die Auslöseeinrichtung ferner einen Motorsensor umfassen.

Es ist jedoch auch möglich, dass die Auslöseeinrichtung die fahrzeugseitige Sende-/Empfangseinrichtung selbst umfasst, die dafür ausgelegt ist, als auslösendes Ereignis ein Verriegelungssignal zum Verriegeln von zumindest einer Tür des Fahrzeugs zu empfangen, wobei die fahrzeugseitige Sende-/Empfangseinrichtung das eine oder die mehreren Abfragesignale ansprechend auf den Empfang des Verriegelungssignals aussendet. Das Verriegelungssignal kann dabei von einer beliebigen Fernsteuerung stammen, die zum Ausgeben von Verriegelungssignalen (vorteilhafterweise auch zum Ausgeben von Entriegelungssignalen) ausgelegt ist. Insbesondere ist es denkbar, dass ein mobiler Identifikationsgeber das Verriegelungssignal (beispielsweise ansprechend auf das Drücken einer Taste durch einen Benutzer) aussendet. Der Vorteil für das Aussenden der Abfragesignale ansprechend auf den Empfang eines Verriegelungssignals hin kann in folgendem Fall bestehen. Die Zugangsanordnung umfasst zumindest einen ersten und einen zweiten mobilen Identifikationsgeber. Während der erste mobilen Identifikationsgeber nach einem Abstellen bzw. Parken des Fahrzeugs von einem Benutzer, der sich vom Fahrzeug wegbewegt, mitgeführt wird, wurde der zweite mobile Identifikationsgeber im Fahrzeug vergessen. Sendet nun der Benutzer bzw. dessen ersten mobiler Identifikationsgeber beispielsweise durch Drücken einer dafür vorgesehenen Taste an dem ersten mobilen Identifikationsgeber ein Verriegelungssignal an das Fahrzeug, so wird eine bzw. werden alle Türen des Fahrzeugs verriegelt und das Fahrzeug beginnt mit dem Aussenden der Abfragesignale. Diese werden vom im Innenraum vergessenen zweiten mobilen Identifikationsgeber empfangen, so dass dieser einen entsprechenden Steuerbefehl ausführen kann, insbesondere eine Deaktivierung (vgl. ausführlicher noch unten), da sich seine Position und somit die gemessenen Signaleigenschaften nicht ändern. Obwohl das Fahrzeug also "aktiv" verriegelt wird, findet in dem erwähnten Fall zusätzlich noch das Aussenden der Abfragesignale statt, um eine Deaktivierung von im Fahrzeug liegen gebliebenen Identifikationsgebern sicherzustellen. Erfindungsgemäß ist die identifikationsgeberseitige Steuereinrichtung derart ausgelegt, bei einer Änderung bezüglich der zu zumindest zwei verschiedenen Zeitpunkten ausgewerteten Signaleigenschaften kleiner oder gleich einem vorbestimmten Schwellenwert ein Deaktivierungssignal zum Deaktivieren des mobilen Identifikationsgebers, insbesondere der identifikationsgeberseitigen Sende-/Empfangseinrichtung, auszugeben. Das bedeutet, ist die Änderung bezüglich der an den zumindest zwei verschiedenen Zeitpunkten ausgewerteten Signaleigenschaften so gering, dass anzunehmen ist, dass der mobile Identifikationsgeber während des Zeitintervalls zwischen den zumindest zwei Messungen bzw. Auswertungen der Signaleigenschaften am gleichen Ort verblieben ist, weil er beispielsweise im Fahrzeuginneren vergessen worden ist, so bestimmt die identifikationsgeberseitige Steuereinrichtung eine Deaktivierung des mobilen Identifikationsgebers oder lediglich der identifikationsgeberseitigen Sende-/Empfangseinrichtung, damit der mobile Identifikationsgeber zumindest für eine bestimmte Zeit nicht mehr in der Lage ist, eine Authentifizierung mit der fahrzeugseitigen Sende-/Empfangseinrichtung durchzuführen (um ein eventuelles Entriegeln einer Fahrzeugtür zu ermöglichen). Eine Deaktivierung des mobilen Identifikationsgebers kann beispielsweise durch Unterbrechen der Stromzufuhr von einer Energiequelle des Identifikationsgebers zu dessen elektronischen Komponenten erfolgen. Um nun einen deaktivierten mobilen Identifikationsgeber bzw. dessen deaktivierte Sende-/Empfangseinrichtung wieder zu aktivieren, kann der mobile Identifikationsgeber ein Betätigungselement beispielsweise in Form einer Taste aufweisen, durch deren Betätigung durch einen Benutzer bzw. Kraftfahrzeugnutzer eine Aktivierung des mobilen Identifikationsgebers oder dessen Sende-/Empfangseinrichtung bewirkt wird. Im Gegensatz zu herkömmlichen Zugangssystemen findet also eine Deaktivierung eines mobilen Identifikationsgebers nicht von außen durch ein Sperrsignal einer fahrzeugseitigen Sende-/Empfangseinrichtung statt, sondern durch Analysieren von Signaleigenschaften von Abfragesignalen zu verschiedenen Zeitpunkten durch den mobilen Identifikationsgeber selbst. Entsprechend kann auch eine erneute Aktivierung wieder direkt am mobilen Identifikationsgeber selbst vorgenommen werden. Erfindungsgemäß ist die identifikationsgeberseitige Steuereinrichtung derart ausgelegt, bei einer Änderung bezüglich der zu zumindest zwei verschiedenen Zeitpunkten ausgewerteten Signaleigenschaften größer dem vorbestimmten Schwellenwert ein Verriegelungssignal zum Verriegeln der Tür des Fahrzeugs auszugeben. Das bedeutet, stellt die identifikationsgeberseitige Steuereinrichtung fest, dass eine signifikante Änderung der an den zumindest zwei verschiedenen Zeitpunkten ausgewerteten Signaleigenschaften gegeben ist, so kann sie darauf schließen, dass sich der mobile Identifikationsgeber bewegt, beispielsweise da er in einer Tasche des Kraftfahrzeugnutzers vorgesehen ist, und sich mit dem Kraftfahrzeugnutzer vom Fahrzeug wegbewegt. In diesem Fall braucht sich der Kraftfahrzeugnutzer nicht mehr selbst um das Verriegeln seines Fahrzeugs kümmern, sondern dies übernimmt der mobile Identifikationsgeber, indem er nach Auswerten der Signaleigenschaften zu verschiedenen Zeitpunkten des einen oder der mehreren Abfragesignale eine signifikante Änderung von diesen erkennt und beispielsweise über die identifikationsgeberseitige Sende-/Empfangseinrichtung das Verriegelungssignal zu der fahrzeugseitigen Sende-/Empfangseinrichtung sendet, welche das Verriegelungssignal (eventuell über eine fahrzeugseitige Steuereinrichtung) einer Verriegelungseinrichtung zum Verriegeln der zumindest einen Tür weitergibt. Die Verriegelungseinrichtung kann dabei ein einzelnes bzw. bestimmtes elektronisch steuerbares Schloss sein oder als Zentralverriegelung des Fahrzeugs ausgeführt sein. Es sei bemerkt, dass als Kriterium für das Aussenden des Verriegelungssignals seitens des mobilen Identifikationsgebers zusätzlich zu einer Feststellung einer Änderung der Signaleigenschaften ferner eine Verringerung der empfangenen Feldstärke von einem ersten zu einem zweiten Abfragesignal erfasst wird.

Gemäß einer weiteren Ausgestaltung erfolgt das Aussenden der Abfragesignale (nach Vorliegen von einem oder mehreren vorbestimmten Kriterien, wie das Erfassen des geschlossenen Zustands der zumindest einen Tür) in bestimmten oder auch periodisch sich wiederholenden Zeitintervallen. Derartige Zeitintervalle können von einer bis mehreren Sekunden, insbesondere 5 Sekunden (s) betragen, um eine signifikante Signaleigenschaftsänderung bei einer Bewegung des mobilen Identifikationsgebers zu erfassen. Wie bereits erwähnt, erfolgt das Aussenden der Abfragesignale nach einem oder mehreren vorbestimmten Kriterien. Es kann auch wieder nach einem oder mehreren vorbestimmten Kriterien beendet werden. Dabei kann das Aussenden der Abfragesignale auf einen vorbestimmten Zeitabschnitt, beispielsweise von 30s, oder auf eine vorbestimmte Anzahl von Abfragesignalen begrenzt sein, beispielsweise zwei bis sechs Abfragesignale. Außerdem kann das Empfangen eines Verriegelungssignals von dem mobilen Identifikationsgeber ein Kriterium zum Beenden des Aussendens der Abfragesignale sein. Der Vollständigkeit halber sei noch der Fall erwähnt, bei dem beispielsweise nach Verlassen des Fahrzeugs seitens des Kraftfahrzeugnutzers und schließen der zumindest einen Fahrzeugtür sowohl im Fahrzeuginneren ein mobiler Identifikationsgeber liegen geblieben ist und ein weiterer mobiler Identifikationsgeber sich mit dem Kraftfahrzeugnutzer vom Fahrzeug wegbewegt. Ausgehend von einem mobilen Identifikationsgeber, der auch in der Lage ist, aktiv durch eine Betätigung seitens des Kraftfahrzeugnutzers ein Verriegelungssignal abzusenden (wie bei einem nachgerüsteten passiven Zugangssystem), so ist es dabei möglich, dass das aktiv ausgesendete Verriegelungssignal beispielsweise von der fahrzeugseitigen Sende-/Empfangseinrichtung empfangen wird, noch bevor ein oder mehrere (insbesondere mehrere) Abfragesignale ausgesendet wurden. In diesem Fall wird die fahrzeugseitige Sende-/Empfangseinrichtung vorteilhafter Weise trotz Empfang des Verriegelungssignals ein oder mehrere (insbesondere mehrere) Abfragesignale aussenden, damit auch ein im Fahrzeuginneren liegen gebliebener mobiler Identifikationsgeber die Möglichkeit hat, eine Änderung bezüglich der Signaleigenschaften zu verschiedenen Zeitpunkten des einen oder der mehreren Abfragesignale festzustellen und sich gegebenenfalls zu deaktivieren.

Gemäß einer weiteren vorteilhaften Ausgestaltung umfassen die Signaleigenschaften, die von der identifikationsgeberseitigen Steuereinrichtung ausgewertet werden, die Feldstärke und/oder Feldrichtung der von der fahrzeugseitigen Sende-/Empfangseinrichtung ausgesendeten Abfragesignale. Insbesondere zur Erfassung der Feldrichtung kann dabei die identifikationsgeberseitige Sende-/Empfangseinrichtung eine dreidimensionale Antennenstruktur aufweisen, die es erlaubt, dreidimensionale Feldvektoren von Abfragesignalen (in Form von Funksignalen) festzustellen.

Gemäß einem weiteren Aspekt der Erfindung wird ein Verfahren zum Betreiben einer Zugangsanordnung für ein Fahrzeug geschaffen, das folgende Schritte aufweist. Es wird ein oder mehrere Abfragesignale seitens des Fahrzeugs ausgesendet. Dieses Aussenden der Abfragesignale kann durch Erfassen eines auslösenden Ereignisses, wie eines Auslösesignals bzw. eines Auslösezustands getriggert bzw. veranlasst werden. Beispielsweise kann das Erfassen des Schließzustands zumindest einer Tür des Fahrzeugs das Aussenden der Abfragesignale bewirken. Schließlich werden von einem mobilen Identifikationsgeber die ausgesendeten Abfragesignale empfangen und bezüglich der Signaleigenschaften ausgewertet. Anschließend wird ein entsprechender unterschiedlicher Steuerbefehl von dem mobilen Identifikationsgeber in Abhängigkeit einer Änderung bezüglich der an zumindest zwei verschiedenen Zeitpunkten ausgewerteten Signaleigenschaften ausgegeben. Dabei wird ein Deaktivierungssignal zum Deaktivieren des zumindest einen mobilen Identifikationsgebers bei einer Änderung bezüglich der zu zumindest zwei verschiedenen Zeitpunkten ausgewerteten Signaleigenschaften kleiner oder gleich einem vorbestimmten Schwellenwert ausgegeben und ein Verriegelungssignal zum Verriegeln von zumindest einer Tür des Fahrzeuges bei einer Änderung bezüglich der zu zumindest zwei verschiedenen Zeitpunkten ausgewerteten Signaleigenschaften größer dem vorbestimmten Schwellenwert ausgegeben. Aufgrund der Auswertung der Signaleigenschaften an zumindest zwei verschiedenen Zeitpunkten ist somit der mobile Identifikationsgeber in der Lage, festzustellen, ob er sich beispielsweise mit einem Kraftfahrzeugnutzer vom Fahrzeug wegbewegt oder sich noch im Fahrzeug befindet und dort liegen gelassen wurde. Entsprechend kann er sicherheitsrelevante Maßnahmen durch Aussenden von unterschiedlichen Steuerbefehlen einleiten.

Vorteilhafte Ausgestaltungen der oben dargestellten Anordnung sind, soweit im Übrigen auf das Verfahren übertragbar, auch als vorteilhafte Ausgestaltung des Verfahrens anzusehen.

Im Folgenden sollen nun beispielhafte Ausführungsformen der vorliegenden Erfindung bezugnehmend auf die beiliegenden Zeichnungen näher erläutert werden. Es zeigen:
- Figur 1: ein Blockschaltbild eines schlüssellosen elektronischen Zugangsberechtigungssystems bzw. einer Zugangsanordnung gemäß einer Ausführungsform der Erfindung;
- 2: eine schematische Darstellung eines Szenarios, bei dem ein Kraftfahrzeugnutzer das Fahrzeug verlässt, wobei zum einen ein mobiler Identifikationsgeber im Fahrzeuginneren zurückgelassen wurde oder zum anderen mit dem Fahrer mitgeführt wird;
- Figur 3: ein Ablaufschema der einzelnen Vorgänge die sowohl im Fahrzeug als auch in einem zugeordneten Identifikationsgeber durchgeführt werden, wenn der Kraftfahrzeugnutzer sein Fahrzeug verlässt.

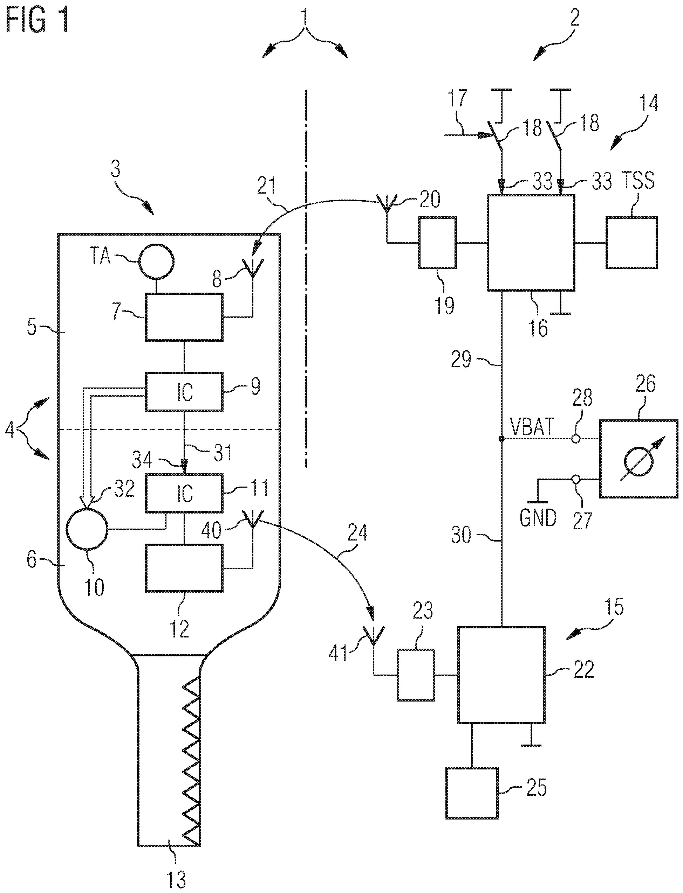

Es sei zunächst auf Figur 1 verwiesen, in der ein Zugangsberechtigungssystem bzw. eine Zugangsanordnung 1, welche hier für die Anwendung in einem Kraftfahrzeug ausgelegt ist, dargestellt ist. Das Zugangsberechtigungssystem 1 umfasst einen fahrzeugseitigen, stationären Bereich 2 sowie einen schlüsselseitigen, mobilen Bereich 3.

In dem mobilen Bereich 3 ist ein mobiler Identifikationsgeber in der Form eines elektronischen Schlüssels 4 vorgesehen. Der elektronische Schlüssel 4 umfasst zwei Schlüsselbereiche 5 und 6. Der erste Schlüsselbereich 5 enthält dabei eine nicht detailliert dargestellte Transponder, und ist für ein passives Zugangssystem, wie zum Beispiel ein PASE-System, ausgebildet. Ferner umfasst der erste Schlüsselbereich 5 eine Empfangseinrichtung 7, welche eine induktive Antenne bzw. Empfangsantenne 8 aufweist, sowie eine mit der Empfangseinrichtung 7 verbundene Steuer- und Auswerteschaltung 9. Der zweite Schlüsselbereich 6 enthält eine Fernbedienungsfunktion (RKE-Remote Keyless Entry) zum ferngesteuerten Ent- und Verriegeln von einem oder mehreren Türschlössern. Typischerweise, jedoch nicht notwendiger Weise, wird die Fernbedienung bei Frequenzen in einem Bereich von etwa 447 MHz betrieben. Die Fernbedienung kann mehrere Schalterstellungen aufweisen, um beispielsweise zu unterscheiden, ob lediglich die Fahrertür, alle Türen, die Kofferraumtür, etc. geöffnet werden sollen, oder ob diese Türen geschlossen bzw. verriegelt werden sollen.

Die Fernbedienung umfasst zumindest eine in Figur 1 nicht dargestellte Fernbedienungstaste, die in bekannter Weise mit einem entsprechenden Aufnehmer 10, beispielsweise einem kapazitiven Aufnehmer, einem Druckaufnehmer oder dergleichen, gekoppelt ist. Der Aufnehmer 10 ist seinerseits über eine Verbindungsleitung mit einer Steuer- und Auswerteeinrichtung 11 gekoppelt, die mit einer Sendeeinrichtung 12 verbunden ist. Die Auswerte- und Steuerschaltungen 9, 11 in dem Schlüssel 4 können beispielsweise als programmierbare Logikschaltungen, beispielsweise als PLD oder als FPGA-Schaltungen oder auch als einfache Mikroprozessoren ausgebildet sein.

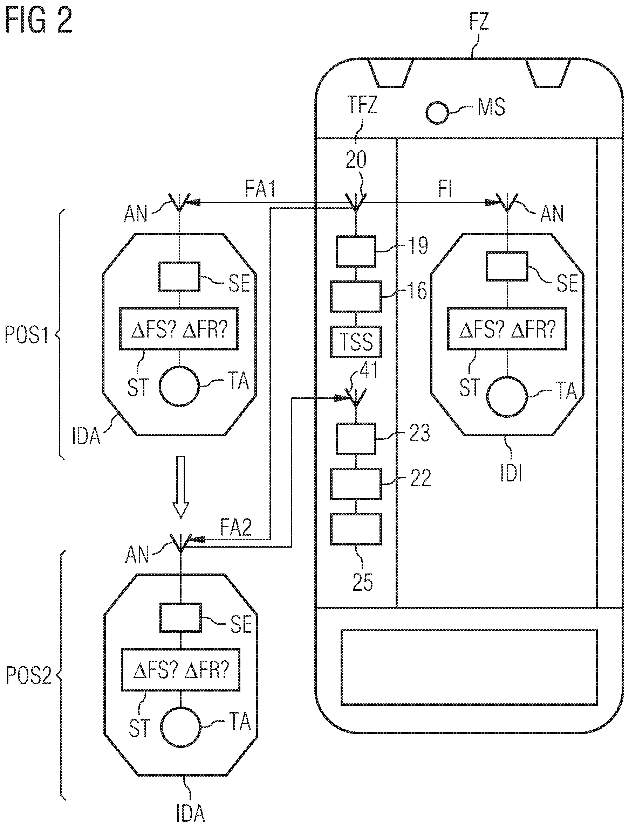

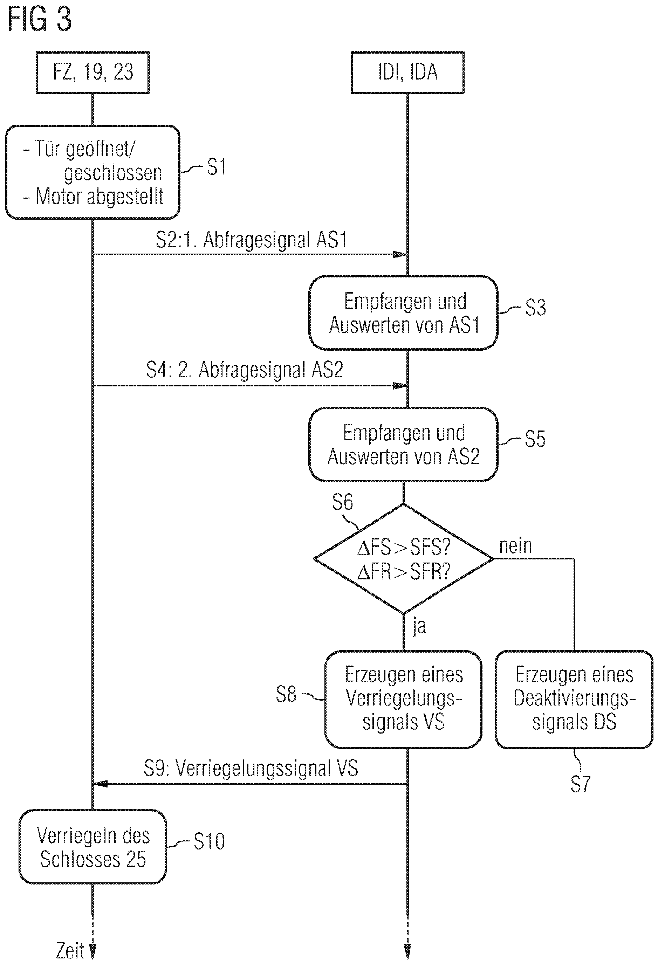

Zusätzlich weist der elektronische Schlüssel 4 auch einen mechanischen Schlüsselbereich 13 auf, der zum mechanischen Öffnen eines Türschlosses mit einem Schlüsselkamm oder Schlüsselbart 13 ausgestattet ist. Außerdem ist eine Taste TA vorgesehen, deren Funktion unten bezüglich der Figuren 2 bzw. 3 erläutert werden wird.

Der fahrzeugseitige, stationäre Bereich 2 umfasst ein passives elektronisches Zugangsberechtigungssystem 14 (oder kurz passives Zugangssystem) sowie ein aktives elektronisches Zugangsberechtigungssystem 15 (oder kurz aktives Zugangssystem). Das passive Zugangssystem 14, hier in der Form eines nachgerüsteten Systems, kann dabei in einer Tür des Fahrzeugs vorgesehen sein (siehe auch Figur 2) und weist ein Steuergerät 16 auf. Das Steuergerät 16 ist zur Aufnahme von passiven Zugangsberechtigungsanfragen 17 mit eigens dafür vorgesehenen Schaltern oder Sensoren 18 verbunden. Diese Schalter 18 können zum Beispiel in einem Türgriff angeordnet sein. Als Sensor eignet sich vorzugsweise ein kapazitiver Sensor oder auch ein optischer Sensor, beispielsweise eine Lichtschranke. Das Steuergerät 16 ist ferner mit einer Sendeeinrichtung 19 verbunden, die seinerseits mit zumindest einer induktiven Antenne bzw. Sendeantenne 20 verbunden ist. Die Reichweite der induktiven Antenne 20 ist für die Überprüfung einer Zugangsberechtigung typischerweise auf etwa 1-2 m um die Fahrzeugtür eingeschränkt, sie kann jedoch für Szenarios, bei denen der Kraftfahrzeugnutzer das Fahrzeug verlässt (vergleiche Beschreibung zu Figuren 2 und 3), auch eine größere Reichweite von mehreren Metern aufweisen. Mittels der fahrzeugseitigen und schlüsselseitigen Sendeeinrichtung 19 bzw. Empfangseinrichtung 7 lässt sich bei Anwendung des passiven Zugangssystems 14 eine vorzugsweise undirektionale Datenkommunikation zwischen der fahrzeugseitigen Basisstation und dem Transponder im ersten Schlüsselbereich aufbauen, wobei die entsprechende Kommunikationsstrecke zwischen den entsprechenden Antennen 8, 20 in Figur 1 mit Bezugszeichen 21 bezeichnet ist. Diese Datenkommunikation 21 erfolgt vorzugsweise mittels hochfrequenter elektromagnetischer Wellen, die zur Verbesserung der Datensicherheit vorzugsweise - jedoch nicht notwendiger Weise - kryptologisch oder mittels eines Festcodes abgesichert ist. Im Falle einer kryptologisch oder mittels eines Festcodes abgesicherten Datenkommunikation erfolgt diese vorzugsweise bidirektional, wobei in diesem Fall jeweils die Antennen 8, 20 als Sende-/Empfangsantennen, die entsprechenden Elemente 7, 19 als Sende-/Empfangseinrichtungen (Transceiver) ausgebildet sein müssen.

Das aktive Zugangssystem 15 umfasst ein Steuergerät 22, beispielsweise das Steuergerät 22 einer Zentralverriegelung, welches über die Funkfernbedienung ansteuerbar ist. Zu diesem Zwecke ist das Steuergerät 22 mit einem Empfänger 23 verbunden. Über einen Sender 12 sowie eine Antenne 40 im zweiten Schlüsselbereich 6 und einem Empfänger 23 sowie einer Antenne 41 im aktiven Zugangssystem 15 ist eine mit Bezugszeichen 24 bezeichnete Kommunikationsverbindung ausbildbar. Das Steuergerät 22 ist mit zumindest einem Schloss 25, beispielsweise einem Türschloss einer Tankklappe, einem Kofferraumdeckel oder dergleichen, verbunden.

Ferner ist eine Versorgungsspannungsquelle 26 vorgesehen. Die Versorgungsspannungsquelle 26 ist im Fall eines Kraftfahrzeugs als Autobatterie, welche ausgangsseitig eine Gleichspannung liefert, ausgebildet. Die Versorgungsspannungsquelle 26 weist zwei Versorgungsausgänge 27, 28 auf. Der erste Versorgungsausgang 27 weist das Potential GND der Bezugsmasse auf. Der zweite Versorgungsanschluss 28 liefert ein Batteriepotential VBAT. Das erste Steuergerät 16 und das zweite Steuergerät 22 sind jeweils über Versorgungsleitungen 29, 30 mit einem zweiten Versorgungsanschluss 28 verbunden, so dass diesen jeweils das Batteriepotential VBAT zugeführt wird. Darüber hinaus sind die beiden Steuergeräte 16, 22 auch mit dem Potential GND der Bezugsmasse verbunden.

Die Steuer- und Auswerteschaltung 9 im ersten Schlüsselbereich 5 ist mit der entsprechenden Steuer- und Auswerteschaltung 11 im zweiten Schlüsselbereich über eine elektrische Verbindungsleitung 31 verbunden. Zusätzlich oder alternativ kann auch vorgesehen sein, dass die Steuer- und Auswerteschaltung 9 über eine mechanische Betätigungseinrichtung mit dem entsprechenden Aufnehmer 10 im zweiten Schlüsselbereich 6 gekoppelt ist. Auf diese Weise lässt sich gesteuert durch die Steuer- und Auswerteschaltung 9 ein mechanischer Druck auf den Aufnehmer 10 simulieren, was in Figur 1 mit der Verbindung 32 angedeutet ist.

Wie bereits kurz angedeutet, ist in dem Zugangsberechtigungssystem 1 der erste Schlüsselbereich 5, wie auch das passive Zugangssystem 14 nachgerüstet worden. Das bedeutet, dass das ursprüngliche Zugangsberechtigungssystem 1 lediglich einen den zweiten Schlüsselbereich 6 aufweisenden elektronischen Schlüssel 4 sowie das aktive Zugangssystem 15 enthalten hat. Durch Ankoppelung des passiven Zugangssystem 14 an die Batterie 26 sowie durch Ankoppelung des ersten Schlüsselbereichs 5 an den elektronischen Schlüssel 4 kann auf sehr einfache und elegante Weise ein Nachrüsten des Zugangsberechtigungssystem erfolgen.

Nachfolgend sei die Funktionsweise des (nachgerüsteten) Zugangsberechtigungssystems 1 entsprechend der Figur 1 für den fall beschrieben, dass ein Benutzer oder Kraftfahrzeugnutzer Zugang zu seinem Fahrzeug erlangen möchte. Dabei sei zunächst lediglich der Fall betrachtet, dass eine passive Zugangsberechtigungsanfrage vorgenommen wird.

Im Fall einer passiven Zugangsberechtigungsanfrage, beispielsweise bei einer Annäherung des Kraftfahrzeugnutzers an das Kraftfahrzeug, wird zumindest einer der Schalter 18 betätigt oder ein entsprechender Sensor 18 spricht an. Dieser Schalter 18 bzw. der Sensor 18 erzeugt ein Sensorsignal 33, welches von dem Steuergerät 16 ausgewertet wird. Bei einer positiven Auswertung des Sensorsignals 33 erfolgt eine erste Datenkommunikation 21. Dabei werden zwischen dem passiven Zugangssystem 14 und dem Transponder im ersten Schlüsselbereich 5 kryptologische Daten ausgetauscht, um festzustellen, ob eine berechtigte Zugangsberechtigungsanfrage 17 vorliegt. Eine berechtigte passive Zugangsberechtigungsanfrage 17 liegt dann vor, wenn ein mit dem richtigen Schlüssel ausgestatteter Kraftfahrzeugnutzer sich diesem nähert. Dies wird in der Steuer- und Auswerteschaltung 9 im Transponder sowie im Steuergerät 16 festgestellt. Bei einer positiven Auswertung einer berechtigten Zugangsberechtigungsanfrage 17 erzeugt die Steuer- und Auswerteschaltung 9 ein Steuersignal 34, welches der Steuer- und Auswerteschaltung 11 im zweiten Schlüsselbereich 6 zugeführt wird. Dieses Steuersignal 34 simuliert eine aktive Zugangsberechtigungsanfrage, entsprechend einem Signal von dem Aufnehmer 10 nach dessen Betätigung. Über den Sender 12 bzw. die Antenne 40 wird sodann ein Zugangssteuersignal mittels der zweiten Datenkommunikation 24 an die Empfangseinrichtung 23 des aktiven Zugangsberechtigungssystem 15 gesendet. Das zweite Steuergerät 22 wertet dies nun als aktive Zugangsberechtigungsanfrage, obgleich es sich hier um eine passive Zugangsberechtigungsanfrage gehandelt hat. Das Steuergerät 22 steuert nun das Schloss (oder auch die Schlösser einer Zentralverriegelung) entsprechend an, wodurch dieses Schloss 25 entriegelt (oder, wie es unten noch beschrieben werden wird, verriegelt) wird. Der fahrzeugseitige End- bzw. Verriegelungsvorgang unterscheidet sich somit nicht von dem bisherigen ferngesteuerten Entriegelungsvorgang bei manueller Betätigung der Fernbedienungstaste im Schlüssel 4.

Das dargestellte Zugangsberechtigungssystem 1 funktioniert selbstverständlich auch dann, wenn der Benutzer die Fernbedienung an dem elektronischen Schlüssel betätigt, also eine tatsächliche aktive Zugangsberechtigungsanfrage vorliegt. In diesem Fall erfolgt eine direkte Datenkommunikation 24 zu dem aktiven Zugangssystem 15 lediglich unter Verwendung der Elemente des zweiten Schlüsselbereichs 6. Darüber hinaus lässt sich das Schloss 25 auch lediglich über den Schlüsselbart 13 ent- und/oder verriegeln.

Nachdem nun in Bezug auf Figur 1 der Fall erläutert wurde, bei dem ein Kraftfahrzeugnutzer Zugang zu seinem Fahrzeug sucht, soll nun bezugnehmend auf Figur 2 bzw. 3 der Fall betrachtet werden, bei dem ein Kraftfahrzeugnutzer beispielsweise nach Abstellen bzw. Parken seines Fahrzeugs, dieses verlassen möchte. Dazu ist in Figur 2 eine Draufsicht auf ein Fahrzeug FZ dargestellt, das eine Fahrzeugtür TFZ (hier zur Veranschaulichung nicht maßstabsgetreu, sondern etwas vergrößert dargestellt) aufweist, in der einige Komponenten des fahrzeugseitigen, stationären Bereichs 2 von Figur 1 untergebracht sind. Es ist hier jedoch auch möglich, dass die Komponenten (41, 22, 23) des aktiven Zugangssystems an einer anderen Stelle des Fahrzeugs FZ vorgesehen sind. Obwohl der bzw. die Schalter 18 ebenso in der Fahrzeugtür vorgesehen sein können, sind sie in der Darstellung von Figur 2 nicht gezeigt, da sie für die folgende Beschreibung nicht benötigt werden.

Figur 2 stellt neben dem Fahrzeug FZ einen mobilen Identifikationsgeber bzw. elektronischen Schlüssel dar, wobei sich ein elektronischer Schlüssel IDI im Inneren des Fahrzeugs, beispielsweise in der Fahrgastzelle befindet und ein weiterer elektronischer Schlüssel IDA sich außerhalb des Fahrzeugs FZ befindet, wobei angedeutet wird, dass sich der außenbefindliche elektronische Schlüssel IDA von einer ersten Position POS1 zu einer zweiten Position POS2 bewegt. Die jeweiligen elektronischen Schlüssel IDI und IDA besitzen beide den gleichen Aufbau (entsprechend dem Schlüssel 4), wobei aus Gründen der übersichtlichen Darstellung nur die wichtigsten Komponenten schematisiert dargestellt sind. Dabei hat ein elektronischer Schlüssel IDI bzw. IDA eine Antenne AN (beispielsweise stellvertretend für die Antennen 8, 40 des Schlüssels 4), eine Sende-/Empfangseinrichtung SE (zusammengefasst bzw. stellvertretend für die Empfangseinrichtung 7 und die Sendeeinrichtung 12 des Schlüssels 4) sowie eine (identifikationsgeberseitige) Steuereinrichtung ST (zusammengefasst oder stellvertretend für die Steuer- und Auswerteschaltungen 9, 11 des Schlüssels 4). Es sei bemerkt, dass die Antenne AN eine dreidimensionale Struktur haben kann, damit auch Änderungen bezüglich der Feldrichtung von empfangenen Abfragesignalen feststellbar sind. Außerdem besitzt ein elektronischer Schlüssel IDI bzw. IDA eine Taste TA, die durch einen Kraftfahrzeugnutzer betätigbar ist und mit der Steuereinrichtung ST in Verbindung steht. Die Bedeutung dieser Taste TA wird unten näher erläutert werden.

Es soll nun der Fall betrachtet werden, dass ein Kraftfahrzeugnutzer nach Abstellen seines Fahrzeugs FZ das Fahrzeug verlassen möchte, wobei sich einerseits ein elektronischer Schlüssel IDI noch im Fahrzeuginneren befindet, während ein weiterer elektronischer Schlüssel IDA mit dem Kraftfahrzeugnutzer mitgeführt wird und sich bezüglich des Fahrzeugs bewegt bzw. vom Fahrzeug FZ wegbewegt. Der elektronische Schlüssel IDI kann beispielsweise von einem Beifahrer, der ebenso im Besitz eines elektronischen Schlüssels für das Zugangsberechtigungssystem des Fahrzeugs FZ ist, versehentlich auf einen Sitz liegen gelassen sein. Ein möglicher Ablauf beim Verlassen des Fahrzeugs des Kraftfahrzeugnutzers ist dabei gemäß einer beispielhaften Ausführungsform in Figur 3 gezeigt.

Wenn ein Kraftfahrzeugnutzer sein Fahrzeug FZ verlassen möchte, wird er zunächst eine Türe TFZ seines Fahrzeuges FZ öffnen, aus dem Fahrzeug steigen und die Tür TFZ wieder schließen. Somit kann in Schritt S1 als erstes Kriterium (bzw. als auslösendes Ereignis) für das Einleiten weiterer Schritte das Erkennen eines geschlossenen Türzustands sein. Es ist auch denkbar, dass das Erkennen zunächst eines offenen Türzustands und dann eines geschlossenen Türzustands ein Kriterium sein kann. Ein jeweiliger Türzustand kann dabei von einem Türschließsensor TSS erkannt werden, der mit dem Steuergerät 16 verbunden ist. Es ist ferner möglich als weiteres Kriterium für das Einleiten folgender Verfahrensschritte zu überprüfen, ob der Motor bzw. die Brennkraftmaschine des Fahrzeugs abgestellt ist, was als Indiz für ein Abstellen bzw. Parken des Fahrzeugs gewertet werden kann. Dazu hat das Fahrzeug einen Motorsensor MS, der (obwohl es nicht dargestellt ist) ebenso mit dem Steuergerät 16 verbunden ist.

Wurde von dem Steuergerät 16 über die jeweiligen Sensoren TSS ein geschlossener Türzustand bzw. ein offener und dann geschlossener Türzustand und von dem Sensor MS ein abgestellter Motorzustand erkannt (ein auslösendes Ereignis kann dabei also das vorliegen von einem oder mehreren Kriterien umfassen), so beginnt nun das Steuergerät 16 eine Mehrzahl von Abfragesignalen bzw. Anfragesignalen hier im Beispiel mit gleichen Signaleigenschaften (wie beispielsweise mit gleicher Feldstärke und/oder gleicher Feldrichtung) von der Sendeeinrichtung 19 über die Antenne 20 aussenden zu lassen. Die Anfragesignale werden dabei in einem zeitlichen Abstand von mehreren Sekunden, beispielsweise 5s ausgesendet. Obwohl in Figur 3 lediglich zwei Abfragesignale AS1 und AS2 dargestellt sind, die von der Sendeeinrichtung 19 ausgesendet werden, ist es auch denkbar, mehr als diese zwei Abfragesignale auszusenden.

Es sei nun wieder auf Figur 3 verwiesen, in der entsprechend dem zeitlichen Ablauf in Schritt S2 das erste Abfragesignal AS1 ausgesendet wird, welches dann in Schritt S3 von beiden elektronischen Schlüsseln IDI und IDA empfangen bzw. bezüglich der Signaleigenschaften, wie beispielsweise Feldstärke und/oder Feldrichtung ausgewertet wird. Entsprechend wird auch das zweite Abfragesignal AS2, das in Schritt S4 von dem Fahrzeug bzw. der Sendeeinrichtung 19 ausgesandt wurde, von den beiden elektronischen Schlüsseln IDI, IDA in Schritt S5 empfangen und bezüglich der Signaleigenschaften ausgewertet. Obwohl es auch möglich ist, lediglich eine bestimmte Signaleigenschaft bezüglich ihrer Veränderung zu analysieren, werden im Folgenden immer mehr Signaleigenschaften, wie die Feldstärke und die Feldrichtung der Abfragesignale analysiert.

Wurden also mindestens zwei Abfragesignale empfangen und bezüglich Signaleigenschaften ausgewertet, so findet nun in Schritt S6 in der jeweiligen Steuereinrichtung ST ein Vergleich bezüglich einer Änderung ΔFS bezüglich der Feldstärke sowie einer Änderung ΔFR bezüglich der Feldrichtung statt(es wäre, wie oben bereits erwähnt, jedoch auch denkbar, lediglich eine der Signaleigenschaften zu analysieren). Geht man nun von dem einen Fall aus, dass ein elektronischer Schlüssel, wie der Schlüssel IDI, im Fahrzeuginneren vergessen wurde, während sich der Kraftfahrzeugnutzer vom Fahrzeug wegbewegt, so wird das erste Abfragesignal AS1 und das zweite Abfragesignal AS2 von dem innen liegenden elektronischen Schlüssel IDI im Wesentlichen mit den gleichen Signaleigenschaften bzw. mit gleicher Feldstärke oder Feldrichtung empfangen werden. Der Abstand FI von der Antenne 20 zur Antenne AN bleibt unverändert. Somit werden die Änderungen ΔFS bzw. ΔFR sehr klein sein bzw. gleich Null sein. Zum Feststellen, ob eine Änderung erfolgt ist, wird deshalb ein jeweiliger Schwellenwert eingeführt, ein Schwellenwert SFS bezüglich der Änderung der Feldstärke sowie ein Schwellenwert SFR bezüglich der Änderung der Feldrichtung. Für einen im Fahrzeug im Wesentlichen unbeweglichen elektronischen Schlüssel IDI werden daher die Änderungen bezüglich Feldstärke und Feldrichtung unterhalb der jeweiligen Schwellenwerte SFS bzw. SFR liegen, so dass hier in den dargestellten "nein"-Zweig verzweigt wird. Anders ausgedrückt wird die Steuereinrichtung ST für den innen befindlichen elektronischen Schlüssel IDI feststellen, dass sich keine Änderung bezüglich der Feldrichtung und Feldstärke und somit keine Bewegung des Schlüssels IDI ergibt, und entsprechend davon ausgehen, dass sich der Schlüssel im Inneren des Fahrzeugs befindet. Da ein derartiger im Fahrzeuginneren befindlicher Schlüssel eine Sicherheitslücke für einen oben dargestellten Zugangsberechtigungsvorgang darstellt, wird nun die Steuereinrichtung ST des Schlüssels IDI in Schritt S7 den Schlüssel IDI deaktivieren bzw. sperren. Dabei kann entweder nur die Sende-/Empfangseinrichtung SE des Schlüssels IDI für eine bestimmte Zeit oder ständig gesperrt werden, um beispielsweise keinen Authentifizierungsvorgang mehr durchführen zu können oder kann der gesamte Schlüssel IDI gesperrt bzw. deaktiviert werden, indem beispielsweise die Energiezufuhr von einer nicht dargestellten Energiequelle des Schlüssels mittels eines Schalters unterbrochen wird.

Auf diese Weise kann durch Empfangen und Auswerten der Abfragesignale des Fahrzeugs von dem innen liegenden Schlüssel selbst festgestellt werden, dass er sich im Innenraum befindet und sich zur Verringerung eines Sicherheitsrisikos selbst zu deaktivieren hat. Mittels der oben beschriebenen Taste TA kann ein Kraftfahrzeugnutzer dann den teilweise oder vollständig gesperrten bzw. deaktivierten Schlüssel wieder aktivieren, in dem er die Taste lediglich einfach oder nach einem bestimmten "Aktivierungsmuster" betätigt.

Es soll nun der Fall diskutiert werden, bei dem der elektronische Schlüssel IDA mit dem Kraftfahrzeugnutzer (beispielsweise in dessen Hosentasche oder Handtasche befindlich) mitgeführt wird, während der Kraftfahrzeugnutzer aus dem Fahrzeug FZ steigt und nach Schließen der Tür sich von dem Fahrzeug FZ entfernt.

Hat der Kraftfahrzeugnutzer nach dem Aussteigen aus dem Fahrzeug FZ die Tür TFZ geschlossen, so wird, wie bereits erwähnt, das Aussenden der Abfragesignale von der Sendeeinrichtung 19 gestartet. Dabei wird sich in einer ersten Position POS1 der außenbefindliche elektronische Schlüssel IDA mit einer geringen Entfernung FA1 von der Antenne 20 befinden, die beispielsweise auch der Entfernung FI des innenbefindlichen elektronischen Schlüssels IDI entsprechen kann. Jedoch bewegt sich der außenbefindliche elektronische Schlüssel IDA nun mit dem Kraftfahrzeugnutzer vom Fahrzeug FZ weg, so dass der Abstand FA2 zur Antenne 20 sich nun beispielsweise bei der Position POS2 vergrößert. Somit werden sich die Signaleigenschaften eines ersten empfangenen Abfragesignals AS1 bei der Position POS1 von den Signaleigenschaften eines zweiten Abfragesignals AS2 an der Position POS2 deutlich unterscheiden. Folglich wird die Steuereinrichtung ST des außenbefindlichen elektronischen Schlüssels IDA an der Position POS2 nach Auswertung der Signaleigenschaften, insbesondere der Feldstärke und der Feldrichtung, feststellen (vergleiche Schritt S6), dass die jeweilige Änderung der Feldstärke ΔFS sowie die Änderung der Feldrichtung ΔFR so markant war, dass sie oberhalb des jeweiligen Grenzwertes SFS bzw. SFR liegt. Aufgrund einer derart markanten Änderung der Signaleigenschaften kann nun der elektronische Schlüssel IDA bzw. dessen Steuereinrichtung ST darauf schließen, dass der elektronische Schlüssel IDA nicht (beispielsweise im Fahrzeuginneren) liegen geblieben ist, sondern sich bewegt bzw. (mit dem Fahrzeugnutzer) vom Fahrzeug wegbewegt. Aufgrund dieser Feststellung wird nun die Steuereinrichtung ST in Schritt S8 beispielsweise an der Position POS2 ein Verriegelungssignal VS erzeugen und dieses in Schritt S9 über die Sende-/Empfangseinheit SE und die Antenne AN zur Antenne 41 des aktiven Zugangssystems (15, vergleiche Figur 1) senden. Hier wird das Verriegelungssignal von dem Empfänger 23 empfangen, von dem Steuergerät 22 ausgewertet und schließlich an das Schloss 25 bzw. eine durch das Schloss 25 repräsentierte Zentralverriegelung weitergeleitet. Das Schloss 25 bzw. die Zentralverriegelung verriegelt dann in Schritt S10 das bzw. die zugeordneten Türschlösser. Somit kann auch bei dem gemäß den Figuren 1 und 2 nachgerüsteten passiven Zugangsberechtigungssystem ein hoher Sicherheitsstandard erreicht werden, in dem der elektronische Schlüssel automatisch, wenn er ein Bewegen bzw. Wegbewegen von dem Fahrzeug erkennt, das Fahrzeug verriegelt.

Es sei noch angemerkt, dass es möglich ist, dass auch der gerade beschriebene elektronische Schlüssel IDA im Außenbereich des Fahrzeugs sich nicht oder nur kaum mit der Zeit bewegt, so dass eine Änderung der Signaleigenschaften bezüglich Feldstärke bzw. Feldrichtung unterhalb des jeweiligen Grenzwertes liegt. In diesem Fall wird sich auch der im Außenbereich befindliche elektronische Schlüssel deaktivieren. Eine derartige Deaktivierung kann jedoch wieder durch Drücken der oben erwähnten Taste TA aufgehoben werden. Gemäß einer vorteilhaften Ausgestaltung ist es ferner möglich, dass der deaktivierte elektronische Schlüssel wieder aktiviert wird, wenn er dazu verwendet wird (entsprechend einer Fernbedienung einer aktiven Zugangsanordnung), beispielsweise durch Drücken einer bestimmten Taste des Schlüssels (vgl. dazu entsprechend die mit dem Aufnehmer 10 verbundene Fernbedienungstaste) ein Verriegelungssignal abzugeben. Das bedeutet durch Drücken einer Taste des Schlüssels, wie einer Taste zum Aussenden eines Fernbedienungssignals (z.B. des Verriegelungssignals oder) kann ein deaktivierter Schlüssel wieder aktiviert werden.

Während bei der gerade beschriebenen Ausführungsform nach Erfassen eines geschlossenen Zustands der Tür TFZ das Aussenden der Abfragesignale von der Sendeeinrichtung 19 gestartet wird, ist es gemäß einer weiteren Ausführungsform auch denkbar, das Aussenden der Abfragesignale dann zu starten, wenn ein (z.B. durch Drücken der entsprechend mit dem Aufnehmer 10 verbundenen Fernbedienungstaste getriggertes) Verriegelungssignal eines "aktiv" bzw. als Fernbedienung genutzten Schlüssels von dem Empfänger 23 empfangen wurde. Das Aussenden der Abfragesignale dient nun insbesondere dazu, dass ein sich im Innenraum befindlicher bzw. vergessener Schlüssel sich deaktivieren kann, wie es oben beschrieben wurde. Um hier dem Problem vorzubeugen, dass jedoch keine Deaktivierung bei bzw. nach aktivem Verriegeln auftritt, wird gemäß dieser weiteren Ausführungsform bei einem "aktiv" genutzten bzw. das Verriegelungssignal aussenden elektronischen Schlüssel eine Auswertung der Signaleigenschaften von den folgenden (auf Verriegelungssignal getriggerte Abfragesignale) empfangenen Abfragesignalen unterdrückt bzw. unterbrochen. Anders ausgedrückt, der "aktiv" genutzte Schlüssel blendet die empfangenen Abfragesignale aus und deaktiviert sich daher nicht. Dieses Ausblenden der empfangenen Abfragesignale kann dabei insbesondere für eine bestimmte Zeitdauer nach Absenden des Verriegelungssignals erfolgen. Vorteilhafterweise ist diese bestimmte Zeitdauer mindestens solange gewählt, solange das (durch das Verriegelungssignal getriggerte) Aussenden der Abfragesignale andauert.

Im Folgenden sollen einige vorteilhafte Ausgestaltungen bezüglich der gerade dargestellten Ausführungsformen eines Zugangsberechtigungssystems kurz dargestellt werden.

Es ist möglich, dass beispielsweise mit einem oder mit allen Abfragesignalen, die vom Fahrzeug FZ bzw. über die Sendeeinrichtung 19 ausgesendet werden, der aktuelle Verriegelungszustand des Fahrzeugs FZ mitgeteilt wird. Diesbezüglich kann auch anstelle des aktuellen Verriegelungszustands des Fahrzeugs der neu (gewollte) Verriegelungszustand (beispielsweise von unverriegelt zu verriegelt) mitgeteilt werden. Kennt nun ein mobiler Identifikationsgeber bzw. mobiler Schlüssel nach auswerten des Abfragesignals den aktuellen Verriegelungszustand oder die gewollte Zustandsänderung, so kann er das entsprechende Signal zur Ver- oder Entriegelung an das Fahrzeug zurück senden.

Außerdem ist es möglich, dass ein Kraftfahrzeugnutzer durch unterschiedliche Betätigung eines Betätigungselements an dem elektronischen Schlüssel unterschiedliche Funktionen (beispielsweise Ver- und Entriegelung, usw.) auslöst. So ist es beispielsweise möglich, dass durch eine einzelne kurze Betätigung der oben erwähnten und nicht dargestellten Fernbedienungstaste, die mit dem Aufnehmer 10 (Figur 1) verbunden ist, beispielsweise direkt ein Entriegelungssignal von dem mobilen Identifikationsgeber ausgesendet wird, während beispielsweise bei einem längeren Betätigen der Fernbedienungstaste oder einem mehrmaligen Betätigen in einem kurzen Zeitintervall ein Verriegelungssignal von dem mobilen Identifikationsgeber zum Fahrzeug gesendet wird.

Zur weiteren Verbesserung der Sicherheit insbesondere bezüglich im Fahrzeuginneren vergessener mobiler Identifikationsgeber bzw. elektronischer Schlüssel ist es denkbar, dass das Steuergerät 16 nach Ablauf eines bestimmten Zeitintervalls nachdem ein Verriegeln des Fahrzeugs festgestellt worden ist (beispielsweise durch einen mit den Steuergerät 16 verbundenem und in den Figuren nicht dargestellten Verriegelungssensor), ein Deaktivierungssignal zum Deaktivieren bzw. Sperren der in einem nahen Empfangsbereich der Sendeeinrichtung 19 (ca. 1-2m um die Sendeeinrichtung 19) befindlichen Identifikationsgeber aussendet bzw. aussenden lässt. Dabei kann zuvor beispielsweise die Verriegelung aufgrund eines Verriegelungssignals eines außenbefindlichen mobilen Identifikationsgebers erfolgt sein oder beispielsweise durch eine mechanische Verriegelung durch den Kraftfahrzeugnutzer. Es wäre diesbezüglich auch denkbar, dass das Steuergerät 16 ohne das Aussenden der Mehrzahl von Abfragesignalen nach einer bestimmten Zeitspanne bzw. einem Zeitintervall und nach Erfassen eines Verriegelns zumindest einer Tür des Fahrzeugs das Deaktivierungssignal aussendet.

Soll ein neuer mobiler Identifikationsgeber bzw. elektronischer Schlüssel mit in das oben dargestellte Zugangsberechtigungssystem aufgenommen werden, so muss der neue mobile Identifikationsgeber zunächst angelernt werden. Sollen mehrere mobile Identifikationsgeber angelernt werden, so kann das Problem auftreten, dass die mehreren Identifikationsgeber miteinander kollidieren. Somit wird vorgeschlagen, bei dem Anlernen mehrerer mobiler Identifikationsgeber diese sukzessive bzw. hintereinander anzulernen, um eine Kollision zu vermeiden.

## Patentansprüche

1. Zugangssystem (1) für ein Fahrzeug (FZ), mit folgenden Merkmalen:
einer fahrzeugseitigen Sende-/Empfangseinrichtung (19) zum Aussenden von einem oder mehreren Abfragesignalen (AS1, AS2); zumindest einem mobilen Identifikationsgeber (IDI, IDA) umfassend:
- eine identifikationsgeberseitige Steuereinrichtung (ST) zum Ausgeben von Steuersignalen und
- eine identifikationsgeberseitige Sende-/Empfangseinrichtung (SE)
- zum Empfangen von Abfragesignalen (AS1, AS2) von der fahrzeugseitigen Sende-/Empfangseinrichtung (19), und
- zum Auswerten von Signaleigenschaften des einen oder der mehreren Abfragesignale zu zumindest zwei verschiedenen Zeitpunkten,
**dadurch gekennzeichnet, dass**
die identifikationsgeberseitige Steuereinrichtung (ST)
- zum Ausgeben eines Deaktivierungssignals (DS) zum Deaktivieren des zumindest einen mobilen Identifikationsgebers (IDI), insbesondere der identifikationsgeberseitigen Sende-/Empfangseinrichtung, bei einer Änderung (ΔFS, ΔFR) bezüglich der zu zumindest zwei verschiedenen Zeitpunkten ausgewerteten Signaleigenschaften kleiner oder gleich einem vorbestimmten Schwellenwert (SFS, SFR) und
- zum Ausgeben eines Verriegelungssignals (VS) zum Verriegeln von zumindest einer Tür (TFZ) des Fahrzeugs (FZ) bei einer Änderung (ΔFS, ΔFR) bezüglich der zu zumindest zwei verschiedenen Zeitpunkten ausgewerteten Signaleigenschaften größer dem vorbestimmten Schwellenwert eingerichtet ist.

2. Zugangsanordnung nach Anspruch 1, die ferner einen Türsensor (TSS) zum Erfassen eines offenen oder geschlossenen Zustands zumindest einer Tür (TFZ) des Fahrzeugs aufweist, wobei die fahrzeugseitige Sende-/Empfangseinrichtung (19) das eine oder die mehreren Abfragesignale (AS1, AS2) dann aussendet, wenn ein geschlossener Türzustand von dem Türsensor erkannt wird.

3. Zugangsanordnung nach Anspruch 1, bei der die fahrzeugseitige Sende-/Empfangseinrichtung (19) ferner dafür ausgelegt ist, ein Verriegelungssignal zum Verriegeln von zumindest einer Tür (TFZ) des Fahrzeugs zu empfangen, wobei die fahrzeugseitige Sende-/Empfangseinrichtung (19) das eine oder die mehreren Abfragesignale (AS1, AS2) ansprechend auf den Empfang des Verriegelungssignals aussendet.

4. Zugangsanordnung nach einem der Ansprüche 1 bis 3, bei der das Aussenden von Abfragesignalen (AS1, AS2) auf einen bestimmten Zeitabschnitt oder auf eine bestimmte Anzahl von Abfragesignalen begrenzt ist.

5. Zugangsanordnung nach einem der Ansprüche 1 bis 4, bei der das Aussenden der Abfragesignale (AS1, AS2) in periodisch sich wiederholenden Zeitintervallen erfolgt.

6. Zugangsanordnung nach einem der Ansprüche 1 bis 5, bei der der mobile Identifikationsgeber ferner ein Betätigungselement (TA) zum Betätigen durch einen Benutzer aufweist, durch dessen Betätigung der zumindest eine mobile Identifikationsgeber (IDI), insbesondere dessen deaktivierte identifikationsgeberseitige Sende-/Empfangseinrichtung (SE), wieder aktivierbar ist.

7. Zugangsanordnung nach einem der Ansprüche 1 bis 6, bei der ein mobiler Identifikationsgeber, der ein Verriegelungssignal zum Verriegeln des Fahrzeugs gesendet hat, für eine bestimmte Zeitdauer keine Abfragesignale empfängt oder auswertet.

8. Zugangsanordnung nach einem der Ansprüche 1 bis 7, bei der die Signaleigenschaften Feldstärke und/oder Feldrichtung umfassen.

9. Zugangsanordnung nach einem der Ansprüche 1 bis 8, bei dem die von der fahrzeugseitigen Sende-/Empfangseinrichtung (19) ausgesendeten Abfragesignale (AS1, AS2) gleiche und/oder gleichbleibende Signaleigenschaften aufweisen.

10. Verfahren zum Betreiben einer Zugangsanordnung (1) für ein Fahrzeug (FZ), mit folgenden Schritten:
Aussenden von einem oder mehreren Abfragesignalen (AS1, AS2) seitens des Fahrzeugs (FZ);
Empfangen der Abfragesignale (AS1, AS2) und Auswerten von Signaleigenschaften des einen oder der mehreren Abfragesignale zu zumindest zwei verschiedenen Zeitpunkten von zumindest einem mobilen Identifikationsgeber (IDI, IDA);
Ausgeben eines Deaktivierungssignals (DS) zum Deaktivieren des zumindest einen mobilen Identifikationsgebers bei einer Änderung (ΔFS, ΔFR) bezüglich der zu zumindest zwei verschiedenen Zeitpunkten ausgewerteten Signaleigenschaften kleiner oder gleich einem vorbestimmten Schwellenwert (SFS, SFR) und Ausgeben eines Verriegelungssignals (VS) zum Verriegeln von zumindest einer Tür des Fahrzeuges bei einer Änderung (ΔFS, ΔFR) bezüglich der zu zumindest zwei verschiedenen Zeitpunkten ausgewerteten Signaleigenschaften größer dem vorbestimmten Schwellenwert (SFS, SFR).

11. Verfahren nach Anspruch 10, bei dem zunächst ein Schließzustand von zumindest einer Tür (TFZ) des Fahrzeugs (FZ) erfasst wird, und dann das eine oder die mehreren Abfragesignalen (AS1, AS2) seitens des Fahrzeugs (FZ) ausgesendet werden, wenn ein geschlossener Türzustand erfasst wurde.

12. Verfahren nach Anspruch 10, bei dem zunächst ein Verriegelungssignal von dem Fahrzeug empfangen wird, und ansprechend auf das Verriegelungssignal dann das eine oder die mehreren Abfragesignale (AS1, AS2) seitens des Fahrzeugs (FZ) ausgesendet werden.

13. Verfahren nach einem der Ansprüche 10 bis 12, bei dem der mobile Identifikationsgeber (IDI) ferner ein Betätigungselement (TA) zum Betätigen durch einen Benutzer aufweist, durch dessen Betätigung der deaktivierte mobile Identifikationsgeber wieder aktivierbar ist.

14. Verfahren nach einem der Ansprüche 10 bis 13, bei dem die seitens des Fahrzeugs ausgesendeten Abfragesignale (AS1, AS2) gleiche und/oder gleichbleibende Signaleigenschaften aufweisen.

## Claims

1. Access system (1) for a vehicle (FZ), having the following features:
a vehicle transmitting/receiving device (19) for emitting one or more query signals (AS1, AS2);
at least one mobile identification transmitter (IDI, IDA) comprising:
- an identification transmitter control device (ST) for outputting control signals and
- an identification transmitter transmitting/receiving device (SE)
- for receiving query signals (AS1, AS2) from the vehicle transmitting/receiving device (19) and
- for evaluating signal properties of the one or more query signals at at least two different times,
**characterized in that**
the identification transmitter control device (ST) is set up
- to output a deactivation signal (DS) for deactivating the at least one mobile identification transmitter (IDI), in particular the identification transmitter transmitting/receiving device, in the event of a change (ΔFS, ΔFR) with respect to the signal properties evaluated at at least two different times which is less than or equal to a predetermined threshold value (SFS, SFR) and
- to output a locking signal (VS) for locking at least one door (TFZ) of the vehicle (FZ) in the event of a change (ΔFS, ΔFR) with respect to the signal properties evaluated at at least two different times which is greater than the predetermined threshold value.

2. Access arrangement according to Claim 1, which also has a door sensor (TSS) for detecting an open or closed state of at least one door (TFZ) of the vehicle, the vehicle transmitting/receiving device (19) emitting the one or more query signals (AS1, AS2) when a closed door state is detected by the door sensor.

3. Access arrangement according to Claim 1, in which the vehicle transmitting/receiving device (19) is also designed to receive a locking signal for locking at least one door (TFZ) of the vehicle, the vehicle transmitting/receiving device (19) emitting the one or more query signals (AS1, AS2) in response to the reception of the locking signal.

4. Access arrangement according to one of Claims 1 to 3, in which the emission of query signals (AS1, AS2) is limited to a particular period of time or to a particular number of query signals.

5. Access arrangement according to one of Claims 1 to 4, in which the query signals (AS1, AS2) are emitted at periodically repeating intervals of time.

6. Access arrangement according to one of Claims 1 to 5, in which the mobile identification transmitter also has an actuation element (TA) for actuation by a user, the actuation of which makes it possible to reactivate the at least one mobile identification transmitter (IDI), in particular its deactivated identification transmitter transmitting/receiving device (SE).

7. Access arrangement according to one of Claims 1 to 6, in which a mobile identification transmitter which has transmitted a locking signal for locking the vehicle does not receive or evaluate any query signals for a particular period.

8. Access arrangement according to one of Claims 1 to 7, in which the signal properties comprise field strength and/or field direction.

9. Access arrangement according to one of Claims 1 to 8, in which the query signals (AS1, AS2) emitted by the vehicle transmitting/receiving device (19) have identical and/or constant signal properties.

10. Method for operating an access arrangement (1) for a vehicle (FZ), having the following steps of:
emitting one or more query signals (AS1, AS2) by the vehicle (FZ);
receiving the query signals (AS1, AS2) and evaluating signal properties of the one or more query signals at at least two different times by at least one mobile identification transmitter (IDI, IDA);
outputting a deactivation signal (DS) for deactivating the at least one mobile identification transmitter in the event of a change (ΔFS, ΔFR) with respect to the signal properties evaluated at at least two different times which is less than or equal to a predetermined threshold value (SFS, SFR), and outputting a locking signal (VS) for locking at least one door of the vehicle in the event of a change (ΔFS, ΔFR) with respect to the signal properties evaluated at at least two different times which is greater than the predetermined threshold value (SFS, SFR).

11. Method according to Claim 10, in which a closed state of at least one door (TFZ) of the vehicle (FZ) is first of all detected and the one or more query signals (AS1, AS2) are then emitted by the vehicle (FZ) if a closed door state has been detected.

12. Method according to Claim 10, in which a locking signal is first of all received by the vehicle and the one or more query signals (AS1, AS2) are then emitted by the vehicle (FZ) in response to the locking signal.

13. Method according to one of Claims 10 to 12, in which the mobile identification transmitter (IDI) also has an actuation element (TA) for actuation by a user, the actuation of which makes it possible to reactivate the deactivated mobile identification transmitter.

14. Method according to one of Claims 10 to 13, in which the query signals (AS1, AS2) emitted by the vehicle have identical and/or constant signal properties.

## Revendications

1. Système d'accès (1) destiné à un véhicule (FZ), présentant les caractéristiques suivantes :
un dispositif d'émission/réception côté véhicule (19) destiné à émettre un ou plusieurs signaux d'interrogation (AS1, AS2) ;
au moins un générateur d'identification mobile (IDI, IDA), comprenant :
- un dispositif de commande côté générateur d'identification (ST) destiné à délivrer un ou plusieurs signaux de commande et
- un dispositif émetteur/récepteur côté générateur d'identification (SE),
- pour recevoir des signaux d'interrogation (AS1, AS2) en provenance du dispositif d'émission/réception côté véhicule (19), et
- pour évaluer les caractéristiques dudit signal ou desdits multiples signaux d'interrogation à au moins deux instants différents,
**caractérisé en ce que** l'unité de commande côté émetteur d'identification (ST) est conçue
- pour délivrer un signal de désactivation (OS) destiné à désactiver ledit au moins un émetteur d'identification mobile (IDI), en particulier le dispositif d'émission/réception côté générateur d'identification, lorsqu'une variation (ΔFS, ΔFR) par rapport aux caractéristiques de signal évaluées à au moins deux instants différents est inférieure ou égale à une valeur de seuil prédéterminée (SFS, SFR), et
- pour délivrer un signal de verrouillage (VS) d'au moins une porte (TFZ) du véhicule (FZ) devant être verrouillée dans lorsqu'une variation (ΔFS, ΔFR) par rapport aux caractéristiques de signal évaluées à au moins deux instants différents est supérieure à la valeur de seuil prédéterminée.

2. Dispositif d'accès selon la revendication 1, comportant en outre un capteur de porte (TSS) destiné à détecter un état ouvert ou fermé d'au moins une porte (TFZ) du véhicule, dans lequel le dispositif d'émission/réception côté véhicule (19) émet un ou plusieurs signaux d'interrogation (AS1, AS2) lorsqu'un état de porte fermé est détecté par le capteur de porte.

3. Dispositif d'accès selon la revendication 1, dans lequel le dispositif d'émission/réception côté véhicule (19) est en outre conçu pour recevoir un signal de verrouillage destiné à verrouiller au moins une porte (TFZ) du véhicule, dans lequel le dispositif d'émission/réception côté véhicule (19) émet un ou plusieurs signaux d'interrogation (AS1, AS2) en réponse à la réception du signal de verrouillage.

4. Dispositif d'accès selon l'une quelconque des revendications 1 à 3, dans lequel l'émission de signaux d'interrogation (AS1, AS2) est limitée à une période de temps déterminée ou à un nombre déterminé de signaux d'interrogation.

5. Dispositif d'accès selon l'une quelconque des revendications 1 à 4, dans lequel l'émission des signaux d'interrogation (AS1, AS2) est effectuée à des intervalles de temps répétés périodiquement.

6. Dispositif d'accès selon l'une quelconque des revendications 1 à 5, dans lequel le générateur d'identification mobile comprend en outre un élément d'actionnement (TA) destiné à être actionné par un utilisateur, dont l'actionnement permet de réactiver ledit au moins un générateur d'identification mobile (IDI), en particulier son émetteur/récepteur (SE) désactivé côté générateur d'identification.

7. Dispositif d'accès selon l'une quelconque des revendications 1 à 6, qui ne reçoit et n'évalue pendant une période de temps déterminée aucun signal d'interrogation provenant d'un générateur d'identification mobile ayant envoyé un signal de verrouillage pour le verrouillage du véhicule.

8. Dispositif d'accès selon l'une quelconque des revendications 1 à 7, dans lequel les caractéristiques de signal comprennent une intensité du champ et/ou une direction du champ.

9. Dispositif d'accès selon l'une quelconque des revendications 1 à 8, dans lequel les signaux d'interrogation (AS1, AS2) émis par le dispositif émetteur/récepteur côté véhicule (19) présentent des caractéristiques de signal identiques et/ou constantes.

10. Procédé de mise en oeuvre d'un dispositif d'accès (1) destiné à un véhicule (FZ), comprenant les étapes consistant à :
émettre un ou plusieurs signaux d'interrogation (AS1, AS2) depuis le véhicule (FZ) ;
recevoir les signaux d'interrogation (AS1, AS2) et évaluer les caractéristiques de signal d'un ou plusieurs signaux d'interrogation à au moins deux instants différents d'au moins un générateur d'identification mobile (IDI, IDA) ;
délivrer un signal de désactivation (DS) destiné à désactiver ledit au moins un générateur d'identification mobile lorsqu'une variation (ΔFS, ΔFR) par rapport aux caractéristiques de signal évaluées à au moins deux instants différents est inférieure ou égale à une valeur de seuil prédéterminée (SFS, SFR) et délivrer un signal de verrouillage (VS) destiné à verrouiller au moins une porte du véhicule lorsqu'une variation (ΔFS, ΔFR) par rapport aux propriétés de signal évaluées à au moins deux instants différents est supérieure à la valeur de seuil prédéterminée (SFS, SFR).

11. Procédé selon la revendication 10, dans lequel un état fermé d'au moins une porte (TFZ) du véhicule (FZ) est détecté en premier lieu, puis un ou plusieurs signaux d'interrogation (AS1, AS2) sont émis par le véhicule (FZ) lorsqu'un état de porte fermée est détecté.

12. Procédé selon la revendication 10, dans lequel un signal de verrouillage est reçu en premier lieu en provenance du véhicule puis, en réponse au signal de verrouillage, un ou plusieurs signaux d'interrogation (AS1, AS2) sont émis par le véhicule (FZ).

13. Procédé selon l'une des revendications 10 à 12,
dans lequel le générateur d'identification mobile (IDI) comporte en outre un élément d'actionnement (TA) destiné à être actionné par un utilisateur, au moyen duquel le générateur d'identification mobile désactivé peut être réactivé.

14. Procédé selon l'une quelconque des revendications 10 à 13,
dans lequel les signaux d'interrogation (AS1, AS2) émis par le véhicule présentent des caractéristiques de signal identiques et/ou constantes.
